**Europäisches Patentamt**

**European Patent Office**

**Office européen des brevets**

(19)

(11) Veröffentlichungsnummer : **0 345 423 B1**

(12) **EUROPÄISCHE PATENTSCHRIFT**

(45) Veröffentlichungstag der Patentschrift :
**29.01.92 Patentblatt 92/05**

(51) Int. Cl.⁵ : **F16D 25/10,** F16D 25/12,
F16D 25/063

(21) Anmeldenummer : **89104689.8**

(22) Anmeldetag : **16.03.89**

(54) **Hydraulisch betätigte Doppelkupplung für ein Kraftfahrzeug.**

(30) Priorität : **09.06.88 DE 3819702**

(43) Veröffentlichungstag der Anmeldung :
**13.12.89 Patentblatt 89/50**

(45) Bekanntmachung des Hinweises auf die
Patenterteilung :
**29.01.92 Patentblatt 92/05**

(84) Benannte Vertragsstaaten :
**DE FR GB IT SE**

(56) Entgegenhaltungen :
**CH-A- 225 841**
**DE-A- 3 526 630**
**DE-B- 1 031 063**
**FR-A- 1 069 725**
**GB-A- 2 191 252**

(56) Entgegenhaltungen :
**US-A- 2 524 311**
**US-A- 3 037 602**
**US-A- 3 384 214**
**US-A- 4 312 434**

(73) Patentinhaber : **Dr.Ing.h.c. F. Porsche**
**Aktiengesellschaft**
**Porschestrasse 42**
**W-7000 Stuttgart 40 (DE)**

(72) Erfinder : **Rispeter, Siegfried**
**Uhlandstrasse 13**
**W-7211 Besigheim (DE)**
Erfinder : **Müller, Hubert, Dipl.-Ing. (FH)**
**Rosenstrasse 26**
**W-7533 Tiefenbronn (DE)**
Erfinder : **Wüst, Rainer, Dipl.-Ing, (FH)**
**Im Krügele 11/1**
**W-7135 Wiernsheim (DE)**

EP 0 345 423 B1

## Beschreibung

Die Erfindung betrifft eine hydraulisch betätigte Doppelkupplung für ein Kraftfahrzeug nach dem Oberbegriff des Anspruchs 1.

Eine derartige Doppelkupplung ist aus der DE-A-3526630 bekannt. Zwei zueinander und zu einer Zentralwelle konzentrische Ringkolben sind in eine Hydraulikplatte eingepaßt, die aus einer Deckplatte und einer mit ihr verschraubten Grundplatte des Kuplungsgehäuses zusammengesetzt ist. Die Ringkolben durchsetzen Zapfen, mit denen über Druckplatten die beiden Kupplungsscheiben betätigt werden. Die Zapfen des einen Ringkolbens sind als Zuganker ausgebildet und ziehen bei Druckbeaufschlagung die eine Kupplungsscheibe von der einen Seite an eine Mittenplatte des Kupplungsgehäuses an. Die andere Kupplungscheibe wird mit den Zapfen direkt von der anderen Seite an die Mittenplatte gedrückt. Die Zapfen sind einerseits in der Grundplatte, andererseits in der Deckplatte längsbeweglich geführt und abgedichtet. Hierzu müssen die Führungsbohrungen in der Deckplatte und der Grundplatte sehr präzise mit engen Toleranzen ausgeführt werden. Die Zapfen selbst stellen teuer zu bearbeitende Drehteile dar.

Aus GB-A-2191252 ist eine Doppelkupplung bekannt, bei der die eine Kupplungsscheibe mit einem druckbeaufschlagten ersten Kolben, die andere Kupplungsscheibe mit einem gegenläufig zum ersten wirkenden, zweiten Ringkolben an eine Mittenplatte des Kupplungsgehäuses angedrückt wird.

Es ist die Aufgabe der Erfindung, eine derartige Doppelkupplung in der Weise weiterzubilden, daß man mit groberen Fertigungstoleranzen auskommt und daß die durch Fliehkräfte hervorgerufenen Druckkräfte auf die Kupplungsscheiben ausgeglichen sind.

Zur Lösung dieser Aufgabe dienen die kennzeichnenden Merkmale des Anspruchs 1. Wenn anstelle der Zapfen Zylinderstifte verwendet werden, die als Massenartikel durch Endlosschleifen herstellbar sind, wird eine erhebliche Kostenersparnis erzielt. Da die Zylinderstifte lediglich in Seitenplatten des Kupplungsgehäuses geführt sind, erfordern diese Führungsbohrungen nur geringere Toleranzansprüche, so daß die Fertigungskosten der Kupplung nochmals verringert sind. Da den Ringkolben in Gegenrichtung beaufsichtigte Rückstellkolben entgegenwirken, ist es möglich, die druckwirksamen Flächen der Ringkolben und der Rückstellkolben so aufeinander abzustimmen, daß die durch Fliehkräfte hervorgerufenen Druckkräfte auf die Kupplungsscheibe ausgeglichen sind.

Als Kupplungsscheiben dienen bevorzugt Pakete aus Innenlamellen und mit ihnen reibschlüssig verbindbare Außenlamellen. Die Lamellenpakete laufen in Hydrauliköl und bilden eine Naßkupplung. Somit entfallen die Abdichtschwierigkeiten, die eventuell bei einer Trockenkupplung auftreten könnten.

Ein Ausführungsbeispiel der Erfindung ist in der Zeichnung dargestellt und wird nachfolgend erläutert. En zeigen :

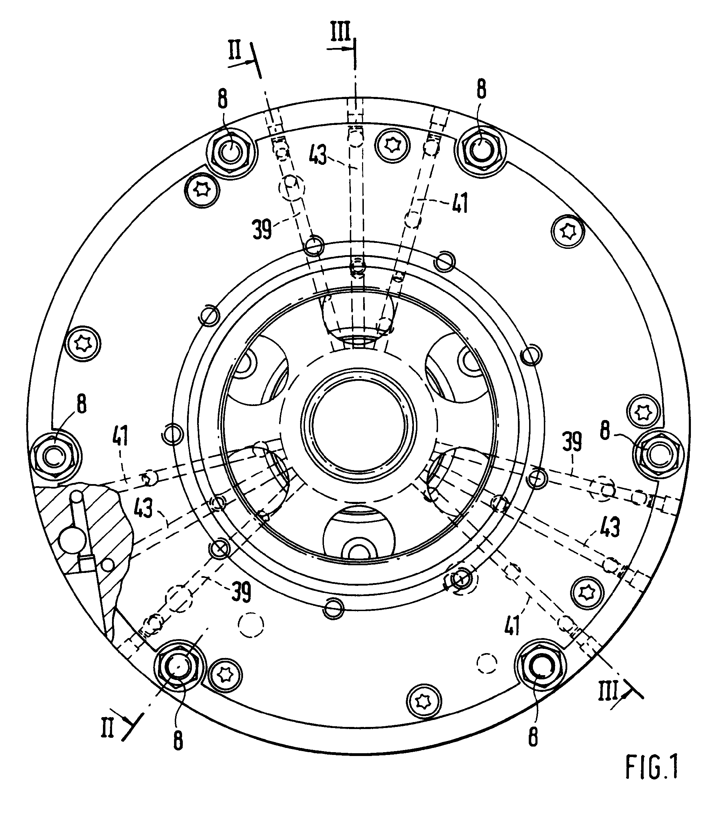

Fig. 1     Seitenanschit auf die Doppelkupplung mit Hydraulikkanälen,

Fig. 2     Längsschnitt nach Linie II-II der Fig. 1,

Fig. 3     Längsschnitt nach Linie III-III der Fig. 1,

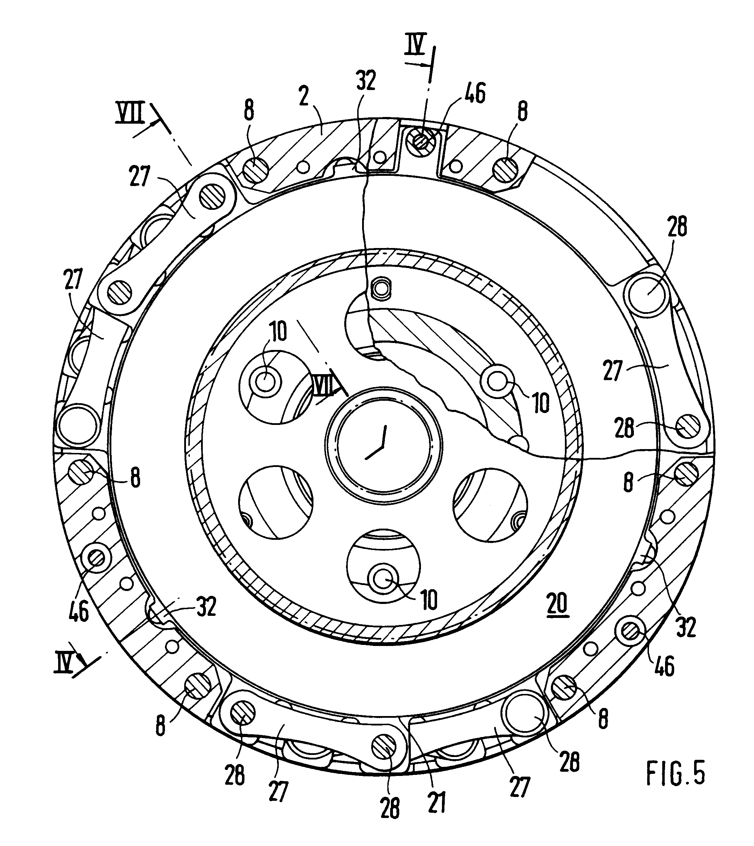

Fig. 4     Längsschnitt nach Linie IV-IV der Fig. 5,

Fig. 5     Anordnung von Tangentialfedern im Querschnitt,

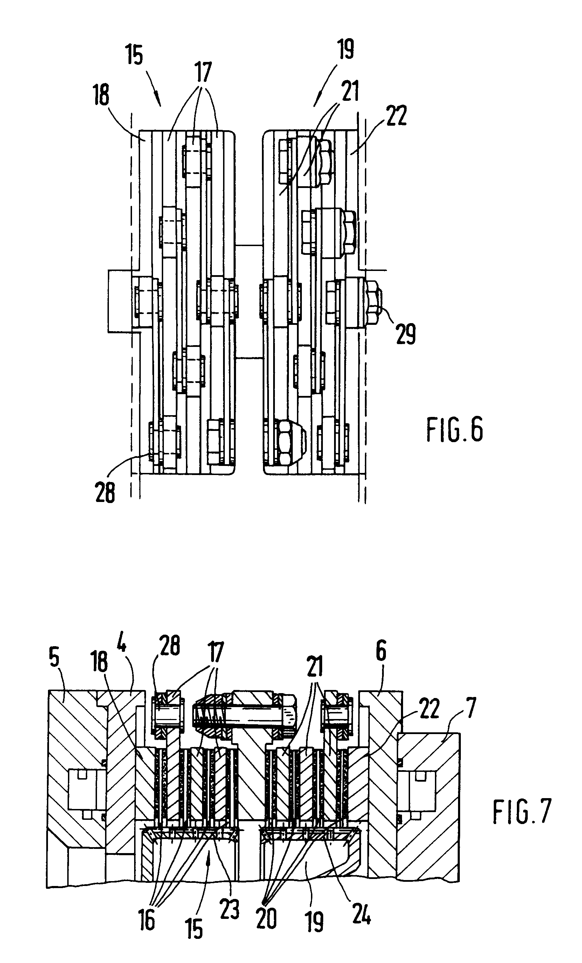

Fig. 6     Draufsicht auf die Tangentialfeder-Anordnung,

Fig. 7     Teilschnitt nach Linie VII-VII der Fig. 5,

Fig. 8     abgewandelter Antrieb des Kupplungsgehäuses.

Eine hydraulische betätigbare Doppelkupplung eines Kraftfahrzeugs ist von einem zylindrischen Kupplungsgehäuse 1 umschlossen. Das Kupplungsgehäuse 1 ist zusammengesetzt aus einem Mantelteil 2 mit radial nach innen vorstehender Mittenplatte 3, einer stirnseitig am Mantelteil 2 anliegenden linken Seitenplatte 4 und einer an sie angeflanschten linken Deckplatte 5, sowie einer rechten Seitenplatte 6 und einer an sie angeflanschten rechten Deckplatte 7. Durch sechs am Umfang verteilte Durchgangsschrauben 8 sowie Innensechskantschrauben 9, 10, sind das Mantelteil 2, die Seitenplatte 4, 6 und die Deckplatten 5, 7 zu einem kompakten Kupplungsgehäuse 1 miteinander verschraubt.

Zum Antrieb des Kupplungsgehäuses 1 ist die linke Seitenplatte 4 mit einer Steckverzahnung 12 versehen, die in eine Gegenverzahnung 13 der Motorausgangswelle 14 eingreift. Es wird so möglich, die Doppelkupplung komplett montiert an den Motor anzuschließen. Zur einen Seite der Mittenplatte 3 liegt ein linkes Lamellenpaket 15 aus Innenlamellen 16, Außenlamellen 17 und einer Druckplatte 18, zur anderen Seite der Mittenplatte 3 ein rechtes Lamellenpaket 19 aus Innenlamellen 20, Außenlamellen 21 und einer Druckplatte 22. Die Innenlamellen 16 greifen in einen Zahnkranz eines Lamellenträgers 23 ein, der mit Kerbverzahnung auf einer Zentralwelle 24 befestigt ist. Die Innenlamellen 20 stehen mit einem Zahnkranz eines zweiten Lamellenträgers 25 in Eingriff, der mit Kerbverzahnung auf einer Hohlwelle 26 befestigt ist.

Die Außenlamellen 17 und 21 sind über Tangentialfedern 27 miteinander verbunden, wobei jeweils zwei Außenlamellen über drei am Umfang gleichmäßig verteilte Tangentialfedern 27 durch Nieten 28 oder Schrauben 29 miteinander und mit den Druckplatten verbunden sind. Die Außenlamellen können somit nur Axialbewegungen ausführen und sind durch die Tangentialfedern 27 federnd zueinander auf Abstand gehalten.

Der durch die Tangentialfedern 27 verursachte axiale Verschiebeweg der Außenlamellen 17, 21 wird begrenzt durch beidseitig an den Lamellenpaketen 15, 19 angeordnete, abgestufte Anschlagstifte 30 und 31. Die Anschlagstifte 30, 31 sind in der linken Seitenplatte 4 bzw. rechten Seitenplatte 6 eingepreßt und stehen mit ihren abgestuften Flächen mit den am Außenrand der Außenlamellen 17, 21 radial vorstehenden Laschen 32 in Anlage.

Zur hydraulischen Betätigung der Lamellenpakete 15, 19 sind in stirnseitigen Ringnuten der linken Deckplatte 5 und der rechten Deckplatte 7 Ringkolben 33 bzw. 34 geführt, die außen durch Kolbenringe 35, innen durch geschlitzte Dichtringe 36 der Deckplatte 5 und 7 abgedichtet sind. Die Ringkolben wirken über zwischenliegende Zylinderstifte 37 auf die Druckplatten 18 und 22 ein.

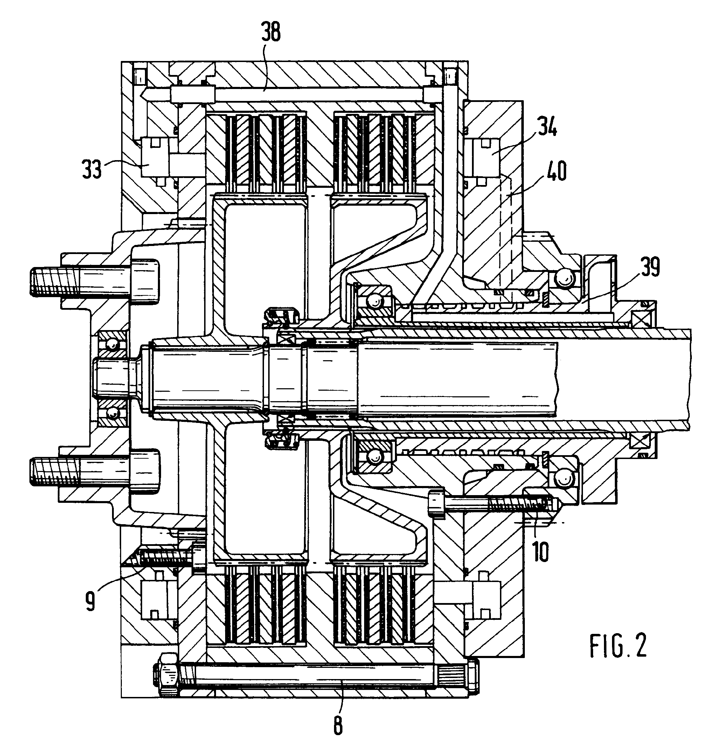

Wie Fig. 2 erkennen läßt, ist der Ringkolben 33 durch einen Druckkanal 38 mit Hydraulikdruck beaufschlagbar. Der Druckkanal 38 geht aus von einem Ringkanal einer zur Hohlwelle 26 konzentrischen, feststehenden Ölführungshülse 39. Er wird gebildet durch eine Radialbohrung der rechten Seitenplatte 6, eine Längsbohrung durch das Mantelteil 2 des Kupplungsgehäuses 1 und eine Radialbohrung der linken Deckplatte 5. Ein Druckkanal 40 für den rechten Ringkolben 34 ist gestrichelt gezeichnet. Er geht ebenfalls von einem Ringkanal der Ölführungshülse 39 aus und verläuft radial in der rechten Deckplatte 7.

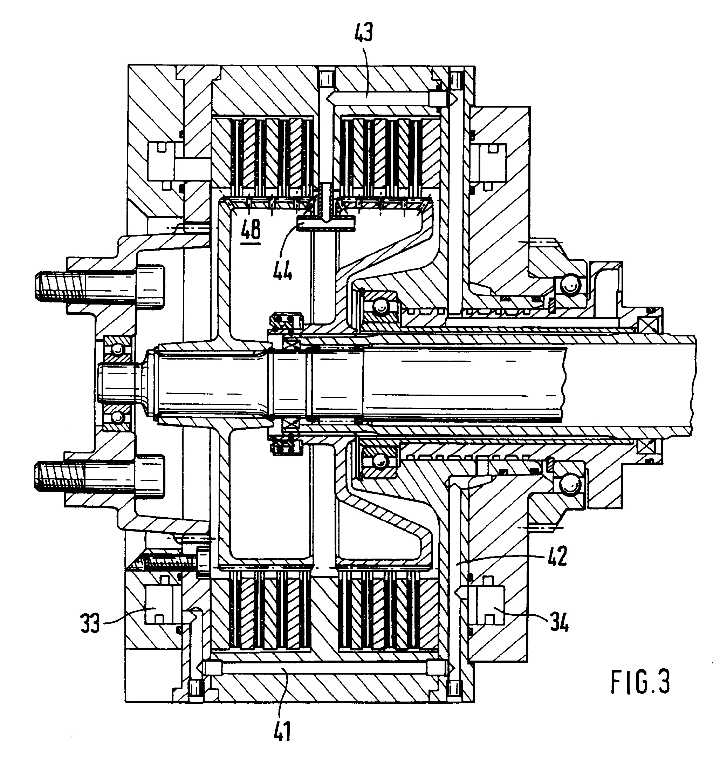

Eine Ölrücklaufleitung 41 vom linken Ringkolben 33 zur Ölführungshülse 39 ist in Fig. 3 zu sehen. An dieser Rücklaufleitung 41 ist auch die Rücklaufleitung 42 des rechten Ringkolbens 34 angeschlossen. In der oberen Hälfte der Fig. 3 ist ein von der Ölführungshülse 39 abzweigender Kühlkanal 43 dargestellt, der radial durch die rechte Seitenplatte 6, längs des Kupplungsgehäuses 1 bis zur Mittenplatte 3 verläuft und in einem in die Mittenplatte 3 eingesteckten T-Stück 44 endet, aus dem bei Bedarf Kühlöl zu den beiden Lamellenträgern 23 und 25 gesprüht wird.

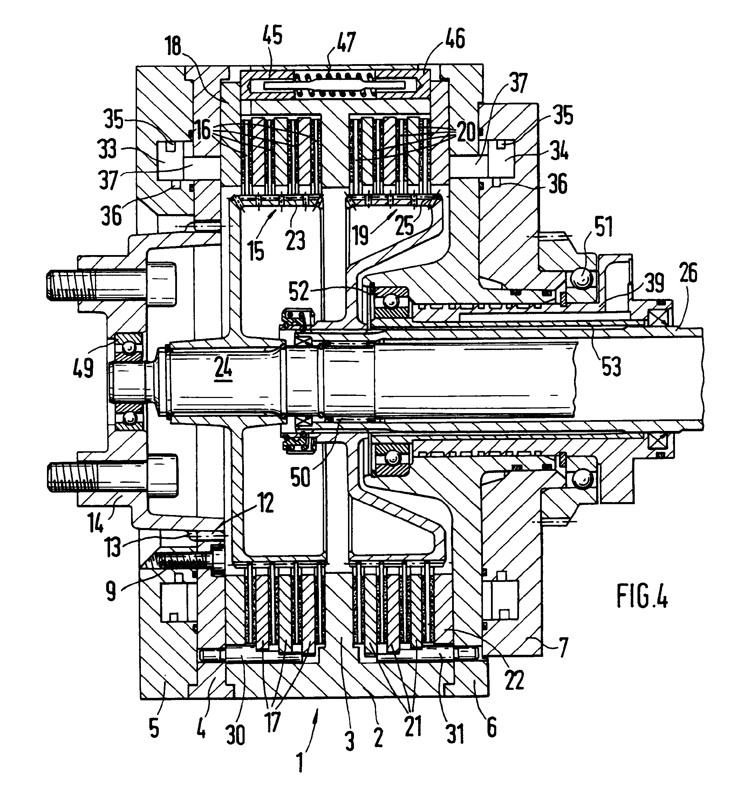

Da die Ringkolben 33, 34 an ihren einen Stirnflächen eine andere druckwirksame Fläche aufweisen als an den anderen Stirnflächen, ist es zweckmäßig, die durch Fliehkräfte hervorgerufenen Druckkräfte auf die Lamellenpakete 15, 19 auszugleichen. Hierzu sind, wie Fig. 4 zeigt, im Mantelteil 2 des Kupplungsgehäuses 1 zueinander koaxiale Rückstellkolben 45, 46 längsverschieblich eingepaßt, die unter Vorspannung einer zwischen ihnen liegenden Feder 47 an den Druckplatten 18, 22 anliegen. Die Rückstellkolben 45, 46 sind an die Rücklaufleitung 41 des Hydrauliköls angeschlossen und mit Rücklaufdruck beaufschlagt. Die druckwirksamen Flächen der Ringkolben 33, 34 und der Rückstellkolben 45, 46 sowie ihre radialen Abstände zur Mittenlängsachse der Doppelkupplung sind so gewählt und aufeinander abgestimmt, daß die durch Fliehkraft hervorgerufenen Druckkräfte auf die Lamellenpakete 15, 19 ausgeglichen sind.

Um die hydraulische Betätigung in reproduzierbarer Weise auf Befehle eines Steuergeräts ansprechen lassen zu können, muß das Hydrauliköl frei von Lufteinschlüssen sein. Eine Entlüftung erfolgt von der Druckseite der Ringkolben 33, 34 durch die Radialschlitze der Dichtringe 36 hindurch auf die Rücklaufseite der Ringkolben 33, 34 und von dort in die Rücklaufleitung 42. Zusätzlich wird Luft an den Zylinderstiften 37 entfernt, indem diese mit Untermaß in den Paßbohrungen der linken Seitenplatte 4 und rechten Seitenplatte 6 liegen und sich durch Fliehkrafteinwirkung mit ihrer Oberseite an die Paßbohrungen anlegen, so daß an ihrer Unterseite ein Ringspalt entsteht, durch den die Lufteinschlüsse in den offenen freien Kupplungsraum 48, in dem die Lamellenträger 23, 25 angeordnet sind, entweichen können.

Zur Lagerung ist die Zentralwelle 24 endseitig mit einem Lagerzapfen versehen, der in einem Kugellager 49 der Motorausgangswelle 14 gelagert ist. Auf der Zentralwelle 24 ist die Hohlwelle 26 in einem Nagellager 50 gelagert. Das von der Motorausgangswelle 14 angetriebene Kupplungsgehäuse 1 ist auf einem Kugellager 51 der feststehenden Ölführungshülse 39 und auf einem weiteren Kugellager 52 gelagert, dessen Innenring auf einer in die Ölführungshülse 39 eingepreßten Lagerhülse 53 befestigt ist.

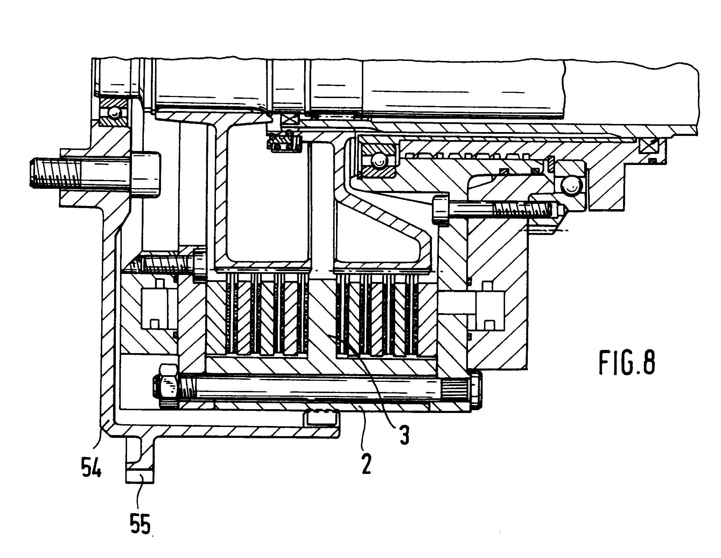

Um das Motordrehmoment unmittelbar in das Kupplungsgehäuse 1 einleiten zu können, ist nach Fig. 8 an der Motorausgangswelle 14 eine Mitnehmerglocke 54 befestigt, die mit einer Verzahnung in eine Gegenverzahnung des Mantelteils 2 eingreift. An der Mitnehmerglocke 54 ist ein Anlasserzahnkranz 55 befestigt.

## Patentansprüche

1. Hydraulisch betätigte Doppelkupplung zum wechselweisen Kuppeln einer Zentralwelle (24) und einer zu ihr konzentrischen Hohlwelle (26) eines Geschwindigkeitswechselgetriebes eines Kraftfahrzeugs mit dem durch die Motorausgangswelle (14) angetriebenen Kupplungsgehäuse (1), wobei mindestens eine mit der Zentralwelle (24) verbundene linke Kupplungsscheibe von der einen Seite her, mindestens eine mit der Hohlwelle

EP 0 345 423 B1

(26) verbundene rechte Kupplungsscheibe von der anderen Seite her an eine Mittenplatte (3) des umlaufenden Kupplungsgehäuses (1) durch Ringkolben (33, 34) andrückbar sind, die konzentrisch zur Zentralwelle (24) angeordnet und zwischen einer Deckplatte (5) und einer mit ihr verschraubten Seitenplatte (4) des Kupplungsgehäuses (1) eingepaßt sind, **dadurch gekennzeichnet**, daß ein Ringkolben (33) an der Trennebene zwischen einer linken Deckplatte (5) und Seitenplatte (4), der andere Ringkolben an einer Trennebene zwischen einer rechten Deckplatte (7) und Seitenplatte (6) des Kupplungsgehäuses (1) eingepaßt ist und daß die Kupplungsscheiben (Lamellen 16, 20) mit den Ringkolben (33, 34) über mehrere stirnseitig an ihnen anliegende, in den Seitenplatten (4, 6) geführte Zylinderstifte (37) betätigbar sind, wobei die Zylinderstifte (37) auf die Lamellenpakete (15, 19) über beidseitig mit Tangentialfedern (27) geführte Druckplatten (18, 22) einwirken und an den Druckplatten (18, 22) von der Seite her Rückstellkolben (45, 46) anliegen, die sich an einer mittig zwischen ihnen angeordneten Feder (47) abstützen und wobei die Rückstellkolben (45, 46) an die von den Ringkolben (33, 34) abgehende Rücklaufleitung (41) des Hydrauliköls angeschlossen sind und so mit Rücklaufdruck beaufschlagt sind.

2. Doppelkupplung nach Anspruch 1, **dadurch gekennzeichnet**, daß links der Mittenplatte (3) ein Lamellenpaket (15) aus Innenlamellen (16) und Außenlamellen (17) rechts der Mittenplatte (3) ein Lamellenpaket (19) aus Innenlammellen (20) und Außenlamellen (21) angeordnet ist, wobei alle Außenlamellen (17, 21) mit dem Mantelteil (2) des Kupplungsgehäuses (1), die linken Innenlamellen (16) über einen Lamellenträger (23) mit der Zentralwelle (24), die rechten Innenlamellen (20) über einen Lamellenträger (25) zur Hohlwelle (26) drehstarr verbunden sind.

3. Doppelkupplung nach Anspruch 1, **dadurch gekennzeichnet**, daß der Durchmesser der Zylinderstifte (37) kleiner ist als die radiale Wandstärke der Ringkolben (33, 34).

4. Doppelkupplung nach Anspruch 1, 2 und 3, **dadurch gekennzeichnet**, daß die Außenlamellen (17, 21) und Druckplatten (18, 22) durch Tangentialfedern (27) miteinander und mit dem Kupplungsgehäuse (1) drehmomentübertragend verbunden sind, wobei die Tangentialfedern (27) die Außenlamellen (17, 21) beim Absenken des Hydraulikdrucks zueinander auf Distanz halten.

5. Doppelkupplung nach Anspruch 1, **dadurch gekennzeichnet**, daß die druckwirksame Fläche der Ringkolben (33, 34) und Rückstellkolben (45, 46) sowie ihre radialen Abstände zur Mittenlängsachse der Dopplekupplung so aufeinander abgestimmt sind, daß sich die durch Fliehkraft hervorgerufenen Druckkräfte auf die Lamellenpakete (15, 19) ausgleichen.

6. Doppelkupplung nach Anspruch 1, **dadurch gekennzeichnet**, daß die Ringkolben (45, 46), Rückstellkolben und Zylinderstifte (37) in Form und Größe jeweils gleich sind.

7. Doppelkupplung nach Anspruch 1, **dadurch gekennzeichnet**, daß zur Abdichtung der Ringkolben (33, 34) äußere und innere radial geschlitzte Kolbenringe (35) dienen, über deren Radialschlitze Lufteinschlüsse im Hydrauliköl zur Rücklaufleitung (41) entweichen können.

8. Doppelkupplung nach Anspruch 1, **dadurch gekennzeichnet**, daß die von dem linken Ringkolben (3) und rechten Ringkolben (34) ausgehenden Rücklaufleitungen (41, 42) miteinander verbunden sind.

9. Doppelkupplung nach Anspruch 1, **dadurch gekennzeichnet**, daß die Mittenplatte (3) einen an die Hydraulikölzufuhr angeschlossenen Kühlkanal (43) enthält, von dem zur Kühlung Hydrauliköl zwischen die beidseits der Mittenplatte (3) liegenden Lamellenpakete (15, 19) gesprüht wird.

10. Doppelkupplung nach Anspruch 1, **dadurch gekennzeichnet**, daß das Kupplungsgehäuse (1) mit einer Steckverzahnung (12) drehmomentübertragend mit der Motorausgangswelle (14) verbindbar ist.

11. Doppelkupplung nach Anspruch 1 und 2, **dadurch gekennzeichnet**, daß die Außenlamellen (17, 21) durch die Tangentialfedern (27) an ihrem Außenrand gegen abgestufte, im Kupplungsgehäuse (1) befestigte Anschlagstifte (30) in Anlage gehalten sind.

12. Doppelkupplung nach Anspruch 10, **dadurch gekennzeichnet**, daß an der Motorausgangswelle (14) eine Mitnehmerglocke (54) befestigt ist, die in der Ebene der Mittenplatte (3) drehmomentübertragend mit dem Mantelteil (2) verbunden ist, und daß an der Mitnehmerglocke (54) ein Anlasserzahnkranz (55) befestigt ist.

## Claims

1. An hydraulically actuated double clutch for alternately connecting a central shaft (24) and a hollow shaft (26) — concentric therewith — of a gearshift transmission of a motor vehicle with the clutch housing (1) driven by the engine output shaft (14), at least one left-hand clutch disc connected to the central shaft (24) being pressable from one side and at least one right-hand clutch disc connected to the hollow shaft (26) being pressable from the other side by annular pistons (33, 34) against a central plate (3) of the surrounding clutch housing (1), and the annular pistons (33, 34) being arranged concentrically with the central shaft (24) and being fitted between a cover plate (5) and a side plate (4) of the clutch housing (1) screwed thereto, characterized in that one annular piston (33) is fitted in the separation plane between a left-hand cover plate (5) and side plate (4), and the other annular piston is fitted in a separation plane between a right-hand cover plate (7) and side plate (6) of the clutch housing (1), and the clutch discs (plates 16, 20) are actuable by the annular pistons (33, 34) by way of a plurality of cylindrical pins (37) resting on the front ends thereof and guided in the side plates (4, 6), the cylindrical pins (37) acting upon the stacks of plates (15, 19) by way of pressure plates (18, 22) guided on both sides by tangential springs (27), and returning pistons (45, 46), which are supported on a spring (47) arranged centrally therebetween, resting on the pressure plates (18, 22) from the side, and the return pistons (45, 46) being connected to the return line (41) of the hydraulic oil leaving the annular pistons (33, 34) and thus being acted upon by return pressure.

2. A double clutch according to Claim 1, characterized in that a stack of plates (15) comprising inner plates (16) and outer plates (17) is arranged to the left of the central plate (3) [and] a stack of plates (19) comprising inner plates (20) and outer plates (21) is arranged to the right of the central plate (3), all the outer plates (17, 21) being connected rotationally rigidly to the casing part (2) of the clutch housing (1), the lefthand inner plates (16) by way of a plate carrier (23) to the central shaft (24), and the right-hand inner plates (20) by way of a plate carrier (25) to the hollow shaft (26).

3. A double clutch according to Claim 1, characterized in that the diameter of the cylindrical pins (37) is less the the radial wall thickness of the annular pistons (33, 34).

4. A double clutch according to Claims 1, 2 and 3, characterized in that the outer plates (17, 21) and pressure plates (18, 22) are connected by tangential springs (27) to one another and to the clutch housing (1) so as to transmit torque, the tangential springs (27) holding the outer plates (17, 21) at a distance from one another as the hydraulic pressure drops.

5. A double clutch according to Claim 1, characterized in that the pressure-effecting area of the annular pistons (33, 34) and the return pistons (45, 46) and their radial distances from the median longitudinal axis of the double clutch are set relative to one another in such a way that the pressure forces — caused by centrifugal force — upon the stacks of plates (15, 19) are equalized.

6. A double clutch according to Claim 1, characterized in that the annular pistons (33, 34), return pistons and the cylindrical pins (37) are in each case the same in shape and size.

7. A double clutch according to Claim 1, characterized in that outer and inner radially slotted piston rings (35), by way of the radial slots of which air pockets in the hydraulic oil can escape to the return line (41), are used to seal the annular pistons (33, 34).

8. A double clutch according to Claim 1, characterized in that the return lines (41, 42) starting from the left-hand annular pistons (3) [sic-33] and the right-hand annular pistons (34) are connected to each other,

9. A double clutch according to Claim 1, characterized in that the central plate (3) contains a cooling duct (43) which is connected to the hydraulic oil supply and from which hydraulic oil is sprayed for cooling purposes between the stacks of plates (15, 19) lying on both sides of the central plate (3).

10. A double clutch according to Claim 1, characterized in that the clutch housing (1) can be connected by an insertion toothing (12) to the engine output shaft (14) so as to transmit torque.

11. A double clutch according to Claims 1 and 2, characterized in that the outer plates (17, 21) are held by the tangential springs (27) on the outer edge thereof so as to rest against stepped stop pins (30) secured in the clutch housing (1).

12. A double clutch according to Claim 10, characterized in that an entrainment bell (54), connected in the plane of the central plate (3) so as to transmit torque to the casing part (2), is secured to the engine output shaft (14), and a starter toothed-rim (55) is secured to the entrainment bell (54).

**Revendications**

1. Embrayage double actionné hydrauliquement pour l'accouplement alternatif d'un arbre central (24) et d'un arbre creux (26) concentrique au premier, d'une boîte de changement de vitesses d'un véhicule automobile avec le carter d'embrayage (1) entraîné par l'arbre de sortie (14) du moteur, dans lequel au moins un disque d'embrayage gauche, relié à l'arbre central (24), peut être pressé à partir d'un côté et au moins un disque d'embrayage droit, relié à l'arbre creux (26), peut être pressé à partir de l'autre côté, par des pistons annulaires (33, 34), contre une plaque centrale (3) du carter d'embrayage (1) tournant, lesquels pistons sont concentriques à l'arbre central (24) et ajustés entre une plaque de couverture (5) et une plaque latérale (4), vissée avec celle-ci, du carter d'embrayage (1), caractérisé en ce qu'un piston annulaire (33) est ajusté sur le plan de séparation, entre une plaque de couverture (5) gauche et une plaque latérale (4), en ce que l'autre piston annulaire est ajusté sur un plan de séparation, entre une plaque de couverture droite (7) et une plaque latérale (6) du carter d'embrayage (1) et en ce que les disques d'embrayage (lamelles 16, 20) peuvent être actionnés avec les pistons annulaires (33, 34), par plusieurs doigts cylindriques (37) s'appliquant frontalement contre ceux-ci, guidés dans les plaques latérales (4, 6), les doigts cylindriques (37) agissant sur les paquets de lamelles (15, 19), par des plaques de pression (18, 22) guidées des deux côtes avec des ressorts tangentiels (27) et en ce que contre les plaques de pression (18, 22) s'appliquent, à partir du côté, des pistons de rappel (45, 46) qui prennent appui contre un ressort (47) placé au centre, entre ceux-ci, et les pistons de rappel (45, 46) étant raccordés au conduit de retour (41) de l'huile hydraulique, partant des pistons annulaires (33, 34) et sont ainsi alimentés en pression de retour.

2. Embrayage double selon la revendication 1, caractérisé en ce qu'à gauche de la plaque centrale (3) est placé un paquet de lamelles (15) faits de lamelles intérieures (16) et de lamelles extérieures (17), à droite de la plaque centrale (3), un paquet de lamelles (19) fait de lamelles intérieures (20) et de lamelles extérieures (21), toutes les lamelles extérieures (17, 21) étant reliées fixes en rotation, à la partie d'enveloppe (2) du carter d'embrayage (1), les lamelles intérieures gauche (16) étant reliées fixes en rotation, à l'arbre central (24), par un support de lamelles (23), les lamelles intérieures droites (20) à l'arbre creux (26), par un support de lamelles (25).

3. Embrayage double selon la revendication 1, caractérisé en ce que le diamètre des doigts cylindriques (37) est inférieur à l'épaisseur de paroi radiale des pistons annulaires (33, 34).

4. Embrayage double selon les revendications 1, 2 et 3 caractérisé en ce que les lamelles extérieures (17, 21) et les plaques de pression (18, 22) sont reliées entre elles et avec le carter d'embrayage (1), par des ressorts tangentiels (27), de manière à transmettre le couple de rotation, les ressorts tangentiels (27) maintenant les lamelles extérieures (17, 21) espacées entre elles, lorsque la pression hydraulique baisse.

5. Embrayage double selon la revendication 1, caractérisé en ce que la surface, utile à la pression, des pistons annulaires (33, 34) et des pistons de rappel (45, 46) ainsi que leurs distances radiales par rapport à l'axe médian longitudinal de l'embrayage double, sont adaptées les unes aux autres de manière que les forces de pression, dues à la force centrifuge, s'équilibrent sur les paquets de lamelles (15, 19).

6. Embrayage double selon la revendication 1, caractérisé en ce que les pistons annulaires (45, 46), les pistons de rappel et les doigts cylindriques (37) ont chacun une forme et des dimensions semblables.

7. Embrayage double selon la revendication 1, caractérisé en ce que pour assurer l'étanchéité des pistons annulaires (33, 34), il est prévu des segments de piston (35) extérieurs et intérieurs, fendus radialement, par les fentes radiales desquels l'air inclus dans l'huile hydraulique peut s'échapper vers le conduit de retour (41).

8. Embrayage double selon la revendication 1, caractérisé en ce que les conduits de retour (41, 42) partant du piston annulaire gauche (3) et du piston annulaire droit (34), sont reliés entre eux.

9. Embrayage double selon la revendication 1, caractérisé en ce que la plaque centrale (1) contient un canal de refroidissement (43) relié à l'arrivée d'huile hydraulique, à partir duquel de l'huile hydraulique est vaporisée entre les paquets de lamelles (15, 19), situés des deux côtés de la plaque centrale (3), en vue du refroidissement.

10. Embrayage double selon la revendication 1, caractérisé en ce que le carter d'embrayage (1) peut être relié à l'arbre de sortie du moteur (14), par une denture d'emboîtement (12), de manière à transmettre le couple de rotation.

11. Embrayage double selon les revendications 1 et 2, caractérisé en ce que les lamelles extérieures (17, 21) sont maintenues appliquées sur leur bord extérieur, par des ressorts tangentiels (27), contre des doigts de butée (30) étagés, fixés dans le carter d'embrayage (1).

12. Embrayage double selon la revendication 10, caractérisé en ce qu'il est fixé sur l'arbre de sortie du moteur (14) une cloche d'entraînement (54) qui est reliée, dans le plan de la plaque centrale (3), avec la partie d'enveloppe (2), de manière à transmettre le couple de rotation et en ce qu'une couronne dentée de démarreur (55) est fixée sur la cloche d'entraînement (54).

FIG.1

FIG.2

FIG.3

FIG.4

FIG.5

FIG.6

FIG.7

FIG.8

54

55

3

2